# FASCICULE DE BREVET EUROPEEN

(11) **EP 0 773 138 B1**
(45) Date de publication et mention de la délivrance du brevet: **10.05.2000**
(21) Numéro de dépôt: 96402356.8
(22) Date de dépôt: 06.11.1996
(51) Int. Cl.: B60Q 1/44, H01R 33/00, F21S 8/10, F21V 23/00

(54) **Feu de signalisation pour véhicule automobile avec connecteur d'alimentation**
Signalleuchte für Kraftfahrzeuge und Anspeiseverbinder
Signalling light for automotive vehicle and connector for the supply

(30) Priorité: 07.11.1995 FR 9513135
(43) Date de publication de la demande: 14.05.1997
(73) Titulaire: VALEO VISION, 93000 Bobigny (FR)
(72) Inventeur: Lopez, Benoît, 81240 St Amans Soult (FR)
(74) Mandataire: Le Forestier, Eric

(56) Documents cités:
- GB-A- 2 053 440
- US-A- 3 441 906
- US-A- 4 628 421
- US-A- 5 152 599
- PATENT ABSTRACTS OF JAPAN vol. 94, no. 012 & JP 06 349305 A (STANLEY ELECTRIC CO LTD), 22 Décembre 1994,

## Description

L'invention concerne un feu de signalisation pour véhicule automobile.

On connaît un feu stop complémentaire destiné à être disposé derrière la lunette arrière ou à l'extérieur d'un véhicule automobile, et comportant une rangée de lampes et deux lames longitudinales disposées le long de cette rangée pour l'alimentation en parallèle des lampes. Les lames sont alimentées par un connecteur fixé aux lames et relié électriquement à celles-ci. Lors du montage du feu de stop sur la chaîne de fabrication du véhicule, on raccorde le connecteur à un module de connexion appartenant au réseau électrique de bord du véhicule. Ce module est logé dans le feu et demeure relié au véhicule par des fils pouvant traverser le socle du feu.

La position du connecteur dans le feu doit être adaptée à celle du module issu du véhicule. Or celle-ci varie dans l'espace selon le type du véhicule. De plus, la position du connecteur logé dans le boîtier du feu obéit à des contraintes d'encombrement liées à la forme de ce boîtier. Or cette forme est également fonction du type de véhicule. Pour pouvoir équiper des véhicules différents, il faudrait donc concevoir plusieurs versions des lames permettant chacune de fixer le connecteur dans une position différente adaptée au type de véhicule, ce qui serait très onéreux.

Un but de l'invention est de pallier cet inconvénient en fournissant un feu de signalisation comportant des pièces standard dont la configuration de montage peut être adaptée en fonction du type de véhicule.

En vue de la réalisation de ce but, on prévoit selon l'invention, un feu de signalisation pour véhicule automobile, comportant des lampes disposées en au moins une rangée, deux lames longitudinales d'alimentation des lampes s'étendant généralement dans un même plan le long de cette rangée et un connecteur d'alimentation des lames fixé et connecté électriquement aux lames, dans lequel les lames présentent au moins une zone de fixation et de connexion électrique comprenant des orifices pour la réception d'éléments de fixation du connecteur, ces orifices permettant la fixation du connecteur selon au moins deux orientations angulaires différentes par rapport à la direction longitudinale des lames.

Lors du montage du connecteur sur les lames, on a donc le choix entre au moins deux orientations du connecteur, ce choix s'effectuant par exemple en fonction de la position du module de connexion ou de la forme du boîtier du feu.

Selon une version préférée de l'invention, la où chaque zone de fixation s'étend à distance d'un support des lames de sorte qu'elle permet la fixation du connecteur d'un côté ou de l'autre du plan des lames.

On peut ainsi mieux adapter la position du connecteur à celle du module de connexion ou à la forme du boîtier.

D'autres caractéristiques et avantages de l'invention apparaîtront encore à la lecture de la description qui va suivre d'un mode préféré de réalisation de l'invention donné à titre d'exemple non limitatif. Aux dessins annexés:
- la figure 1 est une vue de droite d'un feu de signalisation selon l'invention sans son boîtier extérieur, montrant une première position du connecteur ;
- la figure 2 est une vue en plan du feu de signalisation de la figure 1 ;
- la figure 3 est une vue en coupe selon la ligne III-III du feu de signalisation de la figure 2 ;
- la figure 4 est une vue partielle en plan des lames ;
- la figure 5 est une vue partielle analogue à la figure 1, montrant une deuxième position du connecteur ;
- la figure 6 est une vue partielle en plan du feu de signalisation de la figure 5 ; et
- la figure 7 est une vue en coupe selon la ligne VII-VII du feu de signalisation de la figure 6.

Le feu de signalisation représenté sur les figures est un feu stop complémentaire destiné à être fixé derrière la lunette arrière à l'intérieur d'un véhicule automobile, ou encore à l'extérieur du véhicule.

De façon connue, il comporte une rangée de lampes 2 et un support 4 qui définit pour chaque lampe un réflecteur et une douille 5 dans laquelle est engagée la lampe. Ces éléments étant d'un type connu, ils n'ont pas été détaillés sur les figures, seuls leurs contours généraux étant représentés en traits mixtes. Le feu comporte en outre deux lames longitudinales 6, 7 pour l'alimentation des lampes 2 en parallèle. Ces lames ont une forme généralement plane et s'étendent toutes deux dans un même plan, le long de la rangée de lampes 2. Les lames 6, 7 sont fixées au support 4 à l'extrémité des douilles 5 par exemple en étant engagées dans des fentes latérales des douilles 5, de sorte que les lames s'étendent à distance des autres parties du support 4. Le feu comporte également un connecteur 9 d'alimentation des lames 6, 7, fixé aux lames parallèlement au plan de celles-ci et connecté électriquement aux lames. Ce connecteur porte à une extrémité trois broches 11 alignées s'étendant perpendiculairement au plan des lames, les deux broches latérales étant respectivement connectées aux lames 6, 7. A une extrémité opposée, le connecteur est destiné à recevoir un module de connexion 13 issu du véhicule, le connecteur assurant le raccordement électrique de ce module 13 aux lames 6, 7.

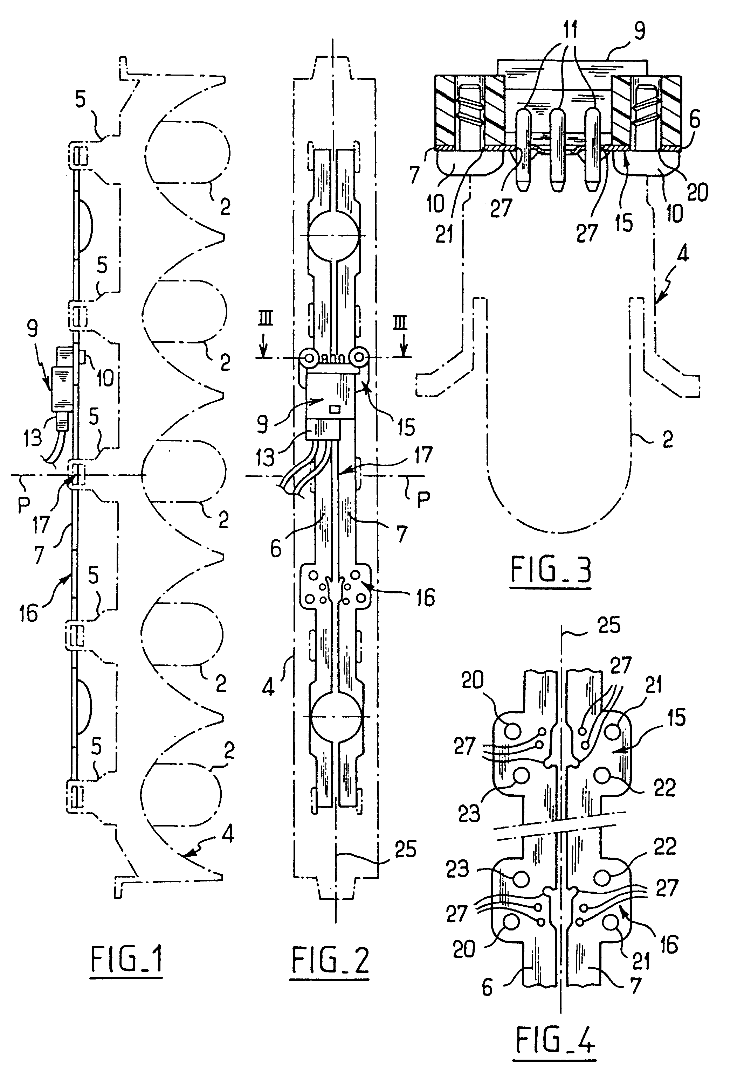

Selon l'invention, les lames présentent deux zones de fixation et de connexion électrique 15, 16 pour le connecteur, visibles notamment sur la figure 4 et s'étendant à égale distance du milieu 17 des lames. Les deux zones de fixation 15, 16 sont symétriques l'une de l'autre par rapport au plan transversal médian P des lames, de sorte qu'on va maintenant décrire la seule zone de fixation 15 qui porte le connecteur sur toutes les figures, sauf sur la figure 4.

La zone de fixation 15 comprend quatre orifices, à savoir deux orifices 20, 23 sur la lame 6 et deux orifices 21, 22 sur la lame 7, destinés à la réception d'éléments de fixation du connecteur tels que des vis 10. Ces quatre orifices forment un trapèze dont les deux côtés parallèles entre eux, formés par les couples d'orifices 20-21 et 23-22, sont perpendiculaires à la direction longitudinale des lames indiquée par l'axe 25, et les deux autres côtés, formés par les couples d'orifices 20-23 et 21-22, ont même longueur. L'axe 25 constitue l'axe de symétrie du trapèze. Les orifices 21 et 22 sont équidistants de l'orifice 20. Les orifices 20 et 23 sont donc de même équidistants de l'orifice 21.

La distance séparant les orifices 20-21 correspond à l'écartement des vis de fixation 10 du connecteur. Ces deux orifices permettent de fixer le connecteur selon une première orientation angulaire par rapport à l'axe 25. Les figures 1, 2 et 3 montrent que le connecteur est ainsi fixé dans la direction longitudinale 25 des lames.

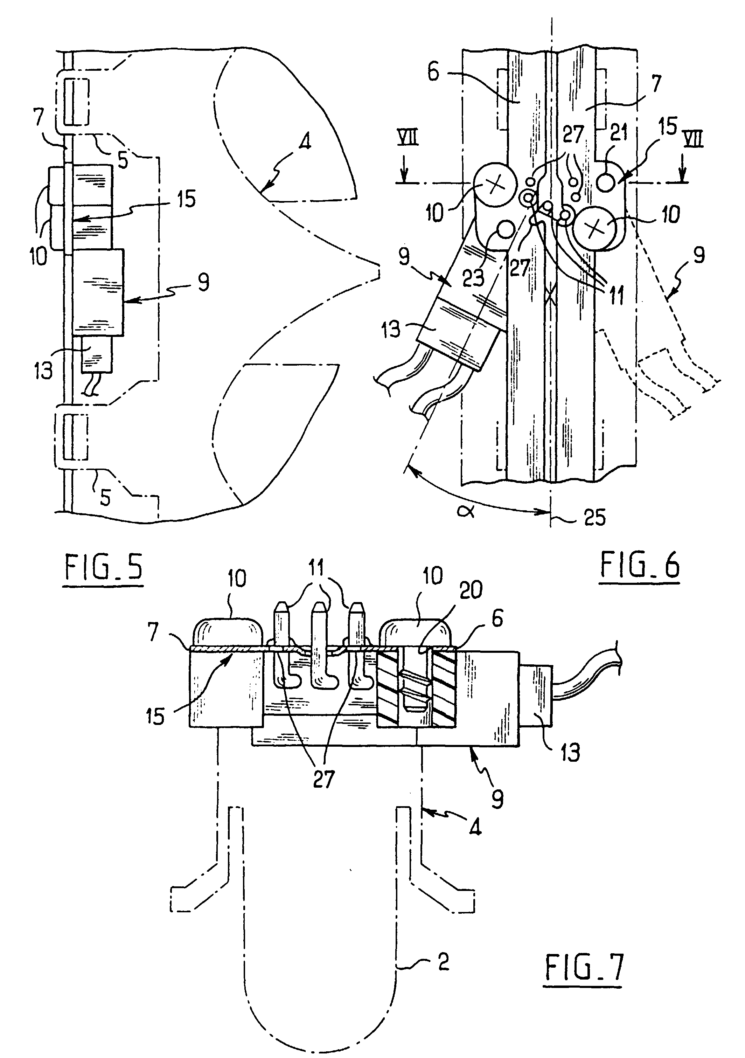

Par ailleurs, les orifices 20 et 22 permettent de fixer le connecteur dans une deuxième orientation angulaire par rapport à l'axe 25, différente de la première orientation angulaire. Sur les figures 5, 6 et 7, le connecteur forme ainsi un angle α d'environ 25° avec l'axe 25, et dépasse sur un côté du support 4.

Les orifices 23-21 permettent de fixer le connecteur avec une troisième orientation angulaire dans laquelle le connecteur forme un angle α de 25° avec l'axe 25, mais en dépassant sur l'autre côté du socle 4, comme représenté en traits pointillés sur la figure 6.

En outre, la zone de fixation 15 s'étend suffisamment à distance des parties du support 4 situées entre les douilles 5 pour permettre la fixation du connecteur 9 au choix d'un côté ou de l'autre du plan des lames. Ainsi sur les figures 1, 2, 3, le connecteur s'étend sur les lames, et sur les figures 5, 6, 7, le connecteur s'étend sous les lames.

La zone de fixation 15 comprend en outre trois paires d'évidements 27 pour la connexion des deux broches 11 latérales aux lames 6, 7 pour chaque position du connecteur. La broche 11 centrale est inutilisée. Chaque paire d'évidements 27 correspond à la fixation du connecteur 9 selon l'une des orientations angulaires précitées, que le connecteur soit sur ou sous les lames.

Chaque paire d'évidements 27 se trouve dans l'alignement des orifices associés. Une fois le connecteur fixé au moyen des vis 10, les deux broches latérales 11 se trouvant dans les évidements 27, sont soudées aux lames respectives.

La zone de fixation 15 offre trois possibilités d'orientation angulaire du connecteur au-dessus des lames. Le module de connexion 13 est fixé au connecteur 9 en étant décalé latéralement de sorte que compte-tenu de l'encombrement de douilles du porte-lampes, la zone de fixation offre deux possibilités d'orientation angulaire du connecteur au-dessous des lames. Elle offre donc au total cinq possibilités de positionnement du connecteur.

En considérant maintenant également les possibilités de connexion offertes par l'autre zone de fixation 16, on dispose au total de dix possibilités de positionnement.

Les différentes possibilités d'orientation angulaire du connecteur et les différentes possibilités de positionnement de celui-ci par rapport au plan des lames permettent de choisir la position du connecteur en fonction des contraintes attachées au véhicule considéré, et ce à partir de lames et d'un connecteur standards. Les positions dans lesquelles le connecteur se trouve sous les lames rendent le connecteur particulièrement peu encombrant et sont donc avantageuses.

En l'espèce, les vis 10 sont des vis autotaraudeuses, creusant le connecteur 9 à mesure qu'elles sont vissées dans celui-ci.

Bien entendu, on pourra apporter à l'invention de nombreuses modifications sans sortir du cadre de celle-ci.

Ainsi, on pourra prévoir une seule zone de fixation du connecteur.

Dans certains cas, le choix de la position angulaire du connecteur pourra dépendre du choix de la position du connecteur par rapport au plan des lames, par exemple si le connecteur ne peut pas être fixé sous les lames dans l'une des orientations angulaires pour des raisons d'encombrement liées à la forme du connecteur et à celle du support.

Si l'on augmente suffisamment la distance entre les douilles, chaque zone de fixation pourra offrir trois possibilités de positionnement du connecteur au-dessous des lames et six possibilités de positionnement du connecteur au-dessus des lames.

## Revendications

1. Feu de signalisation pour véhicule automobile, comportant des lampes (2) disposées en au moins une rangée, deux lames longitudinales (6, 7) d'alimentation des lampes s'étendant généralement dans un même plan le long de cette rangée et un connecteur d'alimentation (9) des lames fixé et connecté électriquement aux lames, caractérisé en ce que les lames (6, 7) présentent au moins une zone de fixation et de connexion électrique (15, 16) comprenant des orifices (20, 21, 22, 23) pour la réception d'éléments de fixation (10) du connecteur, ces orifices permettant la fixation du connecteur selon au moins deux orientations angulaires différentes par rapport à la direction longitudinale (25) des lames.

2. Feu de signalisation selon la revendication 1, caractérisé en ce que la ou chaque zone de fixation (15, 16) s'étend à distance d'un support (4) des lames, de sorte qu'elle permet la fixation du connecteur d'un côté ou de l'autre du plan des lames.

3. Feu de siqnalisation selon la revendication 1, caractérisé en ce que la ou chaque zone de fixation comprend au moins quatre orifices formant un trapèze dont deux côtés parallèles entre eux sont perpendiculaires à la direction longitudinale des lames et deux autres côtés ont même longueur, deux des orifices étant équidistants d'un troisième orifice.

4. Feu de signalisation selon la revendication 1, caractérisé en ce que la ou chaque zone de fixation comprend en outre des évidements (27) pour la connexion de broches (11) du connecteur aux lames, pour chaque orientation du connecteur.

5. Feu de signalisation selon la revendication 1, caractérisé en ce que les lames présentent deux zones de fixation (15, 16) s'étendant à égale distance du milieu (17) des lames.

## Patentansprüche

1. Signalleuchte für Kraftfahrzeuge, umfassend Lampen (2), die in wenigstens einer Reihe angeordnet sind, zwei Längsleisten (6, 7) zur Speisung der Lampen, die sich allgemein in einer gleichen Ebene entlang dieser Reihe erstrecken, und einen Verbinder (9) zur Speisung der Leisten, der an den Leisten befestigt und mit diesen elektrisch verbunden ist, **dadurch gekennzeichnet,** daß die Leisten (6, 7) wenigstens einen Befestigungs- und elektrischen Anschlußbereich (15, 16) aufweisen, der Öffnungen (20, 21, 22, 23) für die Aufnahme von Befestigungselementen (10) des Verbinders enthält, wobei diese Öffnungen die Befestigung des Verbinders entlang wenigstens zwei verschiedenen Winkelausrichtungen im Verhältnis zur Längsrichtung (25) der Leisten ermöglichen.

2. Signalleuchte nach Anspruch 1, **dadurch gekennzeichnet,** daß sich der oder jeder Befestigungsbereich (15, 16) in einem Abstand von einem Träger (4) der Leisten erstreckt, so daß er die Befestigung des Verbinders auf einer oder der anderen Seite der Ebene der Leisten ermöglicht.

3. Signalleuchte nach Anspruch 1, **dadurch gekennzeichnet,** daß der oder jeder Befestigungsbereich wenigstens vier Öffnungen enthält, die ein Trapez bilden, dessen zwei zueinander parallele Seiten senkrecht zur Längsrichtung der Leisten verlaufen und dessen zwei andere Seiten eine gleiche Länge aufweisen, wobei zwei der Öffnungen abstandsgleich zu einer dritten Öffnung angeordnet sind.

4. Signalleuchte nach Anspruch 1, **dadurch gekennzeichnet,** daß der oder jeder Befestigungsbereich außerdem Aussparungen (27) für den Anschluß von Stiften (11) des Verbinders an die Leisten zu jeder Ausrichtung des Verbinders enthält.

5. Signalleuchte nach Anspruch 1, **dadurch gekennzeichnet,** daß die Leisten zwei Befestigungsbereiche (15, 16) aufweisen, die sich in einem gleichen Abstand von der Mitte (17) der Leisten erstrecken.

## Claims

1. Indicator light for a motor vehicle, having lamps (2) disposed in at least one row, two longitudinal blades (6, 7) supplying the lamps extending generally in the same plane along this row and a connector (9) for supplying the blades fixed and electrically connected to the blades, characterised in that the blades (6, 7) have at least one fixing and electrical connection area (15, 16) comprising orifices (20, 21, 22, 23) for receiving fixing elements (10) of the connector, these orifices permitting the fixing of the connector in at least two different angular orientations with respect to the longitudinal direction (25) of the blades.

2. Indicator light according to Claim 1, characterised in that the fixing area or areas (15, 16) extend at a distance from a support (4) of the blades, so that they allow the fixing of the connector on one side or the other of the plane of the blades.

3. Indicator light according to Claim 1, characterised in that the fixing area or areas comprise at least four orifices forming a trapezium where two sides parallel to each other are perpendicular to the longitudinal direction of the blades and two other sides have the same length, two of the orifices being equidistant from a third orifice.

4. Indicator light according to Claim 1, characterised in that the fixing area or areas also comprise recesses (27) for connecting pins (11) of the connector to the blades, for each orientation of the connector.

5. Indicator light according to Claim 1, characterised in that the blades have two fixing areas (15, 16) extending at an equal distance from the middle (17) of the blades.
